# EUROPEAN PATENT SPECIFICATION

(11) **EP 4 487 627 B1**
(45) Date of publication and mention of the grant of the patent: **28.10.2026**
(21) Application number: 22927875.9
(22) Date of filing: 28.02.2022
(51) Int. Cl.: H04W 56/00

(54) **NETWORK DEVICE CAPABLE OF ACTING AS PTP MASTER AND METHOD PERFORMED THEREBY**
NETZWERKVORRICHTUNG MIT DER FÄHIGKEIT ALS PTP-MASTER ZU FUNKTIONIEREN UND DADURCH AUSGEFÜHRTES VERFAHREN
DISPOSITIF DE RÉSEAU CAPABLE D'AGIR EN TANT QUE MAÎTRE PTP ET PROCÉDÉ RÉALISÉ PAR LEDIT DISPOSITIF

(43) Date of publication of application: 08.01.2025
(73) Proprietor: Telefonaktiebolaget LM Ericsson (publ), 164 83 Stockholm (SE)
(72) Inventor: QIN, Xing, Beijing 100102 (CN); XIA, Zhanhong, Beijing 100102 (CN); ZHANG, Jun, Beijing 100102 (CN); WANG, Jun, Beijing 100102 (CN)
(74) Representative: Ericsson
(86) International application number: PCT/CN2022/078392
(87) International publication number: WO 2023/159594

(56) References cited:
- EP-A1- 3 745 597
- CN-A- 103 744 284
- CN-A- 105 259 561
- CN-A- 111 008 239
- CN-A- 112 702 105
- CN-U- 204 287 778
- JP-A- 2014 135 657
- KR-B1- 100 895 177
- US-A1- 2018 196 142
- US-A1- 2019 138 047
- KAMINSKY ROBERT M: "Test Results of IEEE 1588v2 Network Synchronization Holdover Performance using Various Types of Reference Oscillators", 2019 IEEE INTERNATIONAL SYMPOSIUM ON PRECISION CLOCK SYNCHRONIZATION FOR MEASUREMENT, CONTROL, AND COMMUNICATION (ISPCS), IEEE, 22 September 2019 (2019-09-22), pages 1 - 5, XP033653607, DOI: 10.1109/ISPCS.2019.8886634
- EDITOR/CO-EDITOR ET AL: "Revised Recommendation G.8275 (for consent)", vol. 802, 8 July 2017 (2017-07-08), pages 1 - 32, XP068113938, Retrieved from the Internet <URL:grouper.ieee.org/groups/802/1/files/public/docs2017/T17-SG15-170619-TD-PLEN-0076!R1!MSW-E.docx> [retrieved on 20170708]

## Description

### Technical Field

Embodiments of the disclosure generally relate to communication, and, more particularly, to network device capable of acting as precision time protocol (PTP) master and method performed thereby.

### Background

This section introduces aspects that may facilitate better understanding of the present disclosure. Accordingly, the statements of this section are to be read in this light and are not to be understood as admissions about what is in the prior art or what is not in the prior art.

Global navigation satellite system (GNSS) covers global positioning system (GPS), Beidou, GLONASS, etc. When a GNSS receiver unit is powered, it searches for satellites on received radio frequency (RF) signals. Once the GNSS receiver unit locks to satellites, it will start to send one pulse per second (1PPS) and time of day (TOD) sentences towards its client via a TOD interface. After the client or node receives the 1PPS and TOD sentences, the node can take a grandmaster (GM) role and distribute sync to downstream.

International telecommunication union telecommunication standardization sector (ITU-T) V.11-based time/phase distribution interface including RJ-45 connector, 1PPS rise and fall time specification, performance specification, etc., are defined in section 19 of ITU-T G.703.

According to ITU-T G.8275.1, there are several types of clock shown in Table 1 below.

**Table 1: Mapping between [ITU-T G.8275] and PTP clock types**

| **Clock type from [ITU-T G.8275]** | **Description** | **Clock type from [IEEE 1588]** |
|---|---|---|
| T-GM | Master-only ordinary clock | OC |
| | (master with a single PTP port, always a GM, cannot be slaved to another PTP clock) | |
| | Master-only boundary clock (master with multiple PTP ports, always a GM, cannot be slaved to another PTP clock) | BC |
| T-BC | Boundary clock (may become a GM, or may be slaved to another PTP clock) | BC |
| T-TSC | Slave-only ordinary clock (always a slave, cannot become a GM) | OC |
| T-TC | Transparent clock | End-to-end TC |

According to ITU-T G.8275.2, there are several types of clock shown in Table 2 below.

**Table 2: Mapping between ITU-T G.8275.2 and PTP clock types**

| **Clock type from [ITU-T G.8275.2]** | **Description** | **Clock type from [IEEE 1588]** |
|---|---|---|
| T-GM | Master-only ordinary clock (master with a single PTP port, cannot be slaved to another PTP clock) | OC |
| | Master-only boundary clock (master with multiple PTP ports, cannot be slaved to another PTP clock) | BC (Note 1) |
| T-BC-P (partial) | Boundary clock (may become a GM, or may be slaved to another PTP clock) | BC |
| T-BC-A (assisted partial) | Boundary clock assisted by a local time reference that is used as a primary source of time (may become a GM, or may be slaved to another PTP clock) | BC (Note 2) |
| T-TSC-P (partial) | Slave-only, single port, ordinary clock (always a slave) | OC |
| | PTP clock at the end of the PTP synchronization chain, multiple port clock | BC (Note 1) |
| T-TSC-A (assisted partial) | Slave-only, single port, ordinary clock (always a slave) assisted by a local time reference that is used as a primary source of time | OC (Note 2) |
| | PTP clock at the end of the PTP synchronization chain, multiple port clock assisted by a local time reference that is used as a primary source of time | BC (Note 1) (Note 2) |
| NOTE 1 - According to [IEEE 1588], a clock that has multiple PTP ports is by definition a boundary clock. | | |
| NOTE 2 - Examples of a local time reference: PRTC or GNSS-based time source. | | |

For a telecom grandmaster (T-GM), there is always a GNSS receiver inside of the T-GM. For a telecom boundary clock (T-BC) or assisted partial-support telecom boundary clock (T-BC-A) as a GM, there is usually a GNSS receiver integrated with it. The T-BC or T-BC-A can connect with the GNSS receiver via a TOD interface defined in G.703.

EP 3745597 A1 discloses a method for limiting frequency overshoot in a timing recovery loop. A proportional-integral (PI) control system is used to discipline a frequency of an output signal of a voltage controlled oscillator (VCO) in accordance with a time reference signal. A control signal output of the PI control system is monitored to detect conditions which will prospectively cause an excess deviation of the VCO frequency. In response to detecting such a condition, an output of an integral error term generator of the PI control system is locked or held constant to prevent the excess frequency deviation of the VCO.

Kaminsky R. M., "Test Results of IEEE 1588v2 Network Synchronization Holdover Performance using Various Types of Reference Oscillators", 2019 IEEE International Symposium on Precision Clock Synchronization for Measurement, Control, and Communication (ISPCS), discloses holdover in an IEEE 1588v2 application. Lab measurements were taken on a reference design configured as a telecom boundary clock (T-BC) comparing the short- and long-term holdover performance of the node when using a TCXO, OCXO, and age-compensated DOCXO, as its reference oscillator.

### Summary

This summary is set out in the appended set of claims to introduce a selection of concepts in a simplified form that are further described below in the detailed description. This summary is not intended to identify key features or essential features of the claimed subject matter, nor is it intended to be used to limit the scope of the claimed subject matter.

One of the objects of the disclosure is to provide an improved network device capable of acting as a precision time protocol (PTP) master. In particular, one of the problems to be solved by the disclosure is that for the existing network device acting as a PTP master, its PTP performance may be degraded due to the unstable output performance of a global navigation satellite system (GNSS) receiver included in or connected with the network device.

### Brief Description of the Drawings

These and other objects, features and advantages of the disclosure will become apparent from the following detailed description of illustrative embodiments thereof, which are to be read in connection with the accompanying drawings.
FIG. 1 is a diagram illustrating the existing network device acting as a PTP master;
FIG. 2 is a diagram illustrating a scenario where the GNSS receiver related to a node has short outage;
FIG. 3 is a diagram illustrating a network device according to an embodiment of the disclosure;
FIG. 4 is a diagram for explaining the signal controller of FIG. 3;
FIG. 5 is a diagram illustrating a network device according to an embodiment of the disclosure;
FIG. 6 is a flowchart illustrating a method performed by a network device according to an embodiment of the disclosure;
FIG. 7 is a flowchart for explaining the method of FIG. 6;
FIG. 8 is a flowchart illustrating a method performed by a network device according to an embodiment of the disclosure;
FIG. 9 is a flowchart illustrating a method performed by a network device according to an embodiment of the disclosure;
FIG. 10 is a block diagram showing an apparatus suitable for use in practicing some embodiments of the disclosure;
FIG. 11 is a block diagram showing a network device according to an embodiment of the disclosure;
FIG. 12 is a block diagram for explaining the phase detector of FIG. 11;
FIG. 13 is a flowchart illustrating an exemplary process performed by the network device of FIG. 11; and
FIG. 14 is a flowchart illustrating an exemplary process performed by the network device of FIG. 11.

### Detailed Description

For the purpose of explanation, details are set forth in the following description in order to provide a thorough understanding of the embodiments disclosed. It is apparent, however, to those skilled in the art that the embodiments may be implemented without these specific details or with an equivalent arrangement.

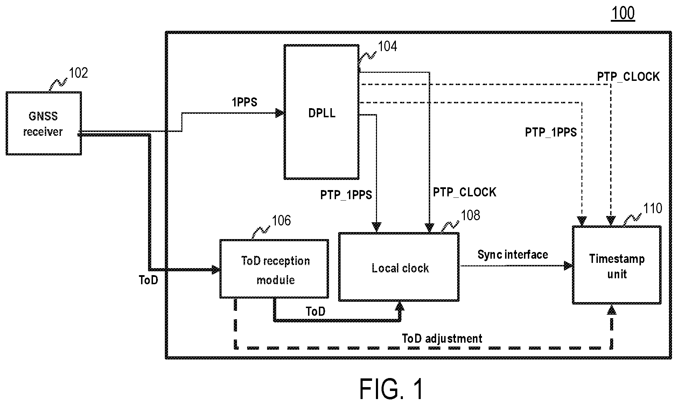

FIG. 1 illustrates the existing network device acting as a PTP master. As shown, the network device 100 comprises or is connectable with a GNSS receiver 102. The network device 100 comprises a digital phase locked loop (DPLL) 104, a time of day (TOD) reception module 106, a local clock 108 and a timestamp unit 110. With this solution, the 1PPS signal from the ToD port of the GNSS receiver 102 is directly connected to the DPLL 104. The DPLL 104 can electrically lock to the input 1PPS signal. When the DPLL 104 is locked to the input 1PPS signal, it can distribute the locked signals to the local clock 108 for maintaining the local clock or to the timestamp unit 110 for timestamping. The ToD message from the GNSS receiver 102 can be received in the ToD reception module 106, and the ToD information may be set to the local clock 108 or the timestamp unit 110 to align the time. Thus, the clock and phase information on the timestamp unit 110 could be from the local clock 108 or the DPLL 104.

The signal from satellites is received by an antenna via radio. Due to some reasons, for example, sky view, weather, interference, etc., it may have frequency short outage during a period or bad signal. This will cause the GNSS receiver output to be unstable. When a T-GM, a T-BC or a T-BC-A (as a GM) is integrated with the GNSS receiver via the TOD port, the status of the GM may change due to the short outage, and the output performance may be degraded due to the bad signal.

There may be typically two failure cases needed to be considered. The first case is that the GNSS receiver has 1PPS short outage. Due to sky view, interference, or weather, etc., the GNSS receiver may stop the 1PPS signal for several seconds and be recovered for several times in a short period. This has an impact on the existing solution shown in FIG. 1. Specifically, with the existing solution, the DPLL will report lost lock of 1PPS and consequently PTP will lose GNSS reference, thereby either going into holdover or switching to a backup reference.

This change on PTP may cause network re-arrangement, in further to trigger sync chain changes on the network, especially for the case when Appendix V of G.8275.1 is applied. According to Appendix V of G.8275.1, the Acquiring clock mode, if included in an implementation, allows a T-GM or a T-BC to delay the distribution of GM information transmitted by the clock. The purpose of this Acquiring clock mode is to allow a T-GM or a T-BC some time to establish a timescale with acceptable accuracy before using it for the clock's node time.

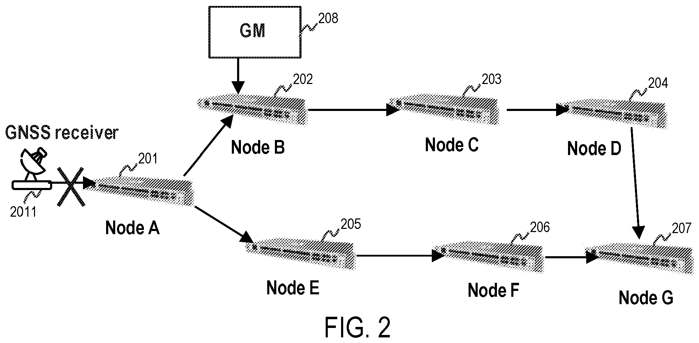

For example, as shown in FIG. 2, if the GNSS receiver 2011 has short outage, then Node A may go into to holdover since there is no available source. Node B would switch to the backup GM 208, thereby changing to acquire state from the new clock source. Consequently, Nodes A, C, D, E, F and G would also change the source and clock state. This is a big impact for the PTP chain.

The second case is that the GNSS receiver has 1PPS signal degraded. That is, the 1PPS and ToD message are still there, but the quality of the 1PPS is degraded. For example, the 1PPS has an offset of several microseconds compared with the GPS phase in several second's period. This may also have a big impact on the Sync network. This is because with the existing solution of FIG. 1, the DPLL will follow this degraded 1PPS signal to set the local clock. The wrong phase information will take effect on the timestamp unit and be distributed to the downstream. This causes the whole PTP phase shifting on the chain, further causing service impact on radio base stations (RBSs).

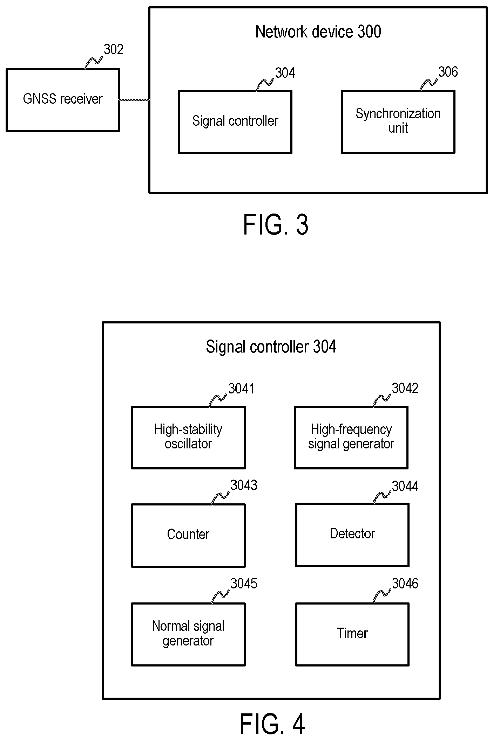

The present disclosure proposes an improved network device acting as a PTP master and a method performed thereby. Examples of the network device include, but not limited to, a switch, a router, a baseband device, a radio equipment, and the like. The network device may also be a "multiple services network device" that provides support for multiple networking functions (e.g., switching, routing, bridging, Layer 2 aggregation, session border control, quality of service, and/or subscriber management), and/or provides support for multiple application services (e.g., data, voice, and video). When carrying out PTP clock synchronization, the network device may act as any one of a telecom grandmaster (T-GM), a telecom boundary clock (T-BC), an assisted partial-support telecom boundary clock (T-BC-A), and the like. Hereinafter, the solution of the present disclosure will be described in detail with reference to FIGs. 3-14.

FIG. 3 is a diagram illustrating a network device according to an embodiment of the disclosure. As shown, the network device 300 comprises or is connectable with a GNSS receiver 302 for receiving a pulse timing signal (e.g. a 1PPS signal). Thus, the network device is capable of acting as a PTP master. The network device 300 comprises a signal controller 304 and a synchronization unit 306. The signal controller 304 is configured to detect whether the received pulse timing signal is in abnormal status, to generate and provide a normal pulse timing signal to the synchronization unit 306 within a predetermined time period in response to detecting the received pulse timing signal to be in abnormal status, and to provide the received pulse timing signal to the synchronization unit 306 in response to detecting the received pulse timing signal to be not in abnormal status. The synchronization unit 306 is configured to synchronize with the generated normal pulse timing signal or the received pulse timing signal. For example, the synchronization unit 306 may be a PLL/DPLL, or any other circuit with similar functionality. With the network device of FIG. 3, the unstable problem of the GNSS receiver can be solved to improve the stability of the PTP master.

As a first case, the abnormal status is a status where the received pulse timing signal is in outage. For this first case, the signal controller 304 may comprise a timer 3046 whose expiration time is the predetermined time period, as shown in FIG. 4. The signal controller 304 may be further configured to detect whether the received pulse timing signal is recovered to be normal when the predetermined time period has elapsed, and to trigger a first predetermined remedial operation when detecting the received pulse timing signal to be not recovered. For example, the first predetermined remedial operation may comprise, but not limited to, a PTP holdover, or a switching to a backup clock source. The holdover may refer to an operating condition of a clock which has lost its controlling input and is using stored data, acquired while in locked operation, to control its output. On the other hand, the signal controller 304 may be further configured to provide the received pulse timing signal to the synchronization unit 306 when detecting the received pulse timing signal to be recovered.

As a second case, the abnormal status is a status where the received pulse timing signal is degraded (e.g. by a predetermined signal quality). For this second case, the predetermined time period may be a time period during which a predetermined number of consecutive pulse timing signals are detected in terms of occurrence or absence of degradation. The signal controller 304 may be further configured to detect whether the received pulse timing signal is recovered to be normal when the predetermined number of consecutive pulse timing signals have been detected, and to trigger a second predetermined remedial operation when detecting the received pulse timing signal to be not recovered. For example, the second predetermined remedial operation may comprise, but not limited to, a PTP holdover, or a switching to a backup clock source, or a restart of the GNSS receiver. On the other hand, the signal controller 304 may be further configured to provide the received pulse timing signal to the synchronization unit 306 when detecting the received pulse timing signal to be recovered.

For either of the above two cases, the signal controller 304 may comprise a high-stability oscillator 3041, a high-frequency signal generator 3042, a counter 3043, a detector 3044 and a normal signal generator 3045. For example, the high-stability oscillator 3041 may be a temperature compensation crystal oscillator (TCXO), or an oven controlled crystal oscillator (OCXO), or any other oscillator with similar performance. The high-frequency signal generator 3042 may be configured to generate a high-frequency signal based on a clock signal from the high-stability oscillator. For example, The high-frequency signal generator 3042 may be implemented as a PLL/DPLL, or any other circuit with similar functionality.

The counter 3043 is configured to count a number of pulses of the high-frequency signal that occur between two predetermined edges of the received pulse timing signal. As an example, the two predetermined edges may be the rising edges of two consecutive pulse timing signals. As another example, the two predetermined edges may be the rising edge and the falling edge of one pulse timing signal. The counter 3043 may be implemented by using various hardware circuits such as field programmable gate array (FPGA), application specific integrated circuit (ASIC), or the like.

The detector 3044 is configured to detect whether the received pulse timing signal is in abnormal status, based on the counted number of pulses of the high-frequency signal. For example, the detector 3044 may be configured to detect the received pulse timing signal to be in abnormal status when a difference between the counted number of pulses of the high-frequency signal and a reference number of pulses of the high-frequency signal is not within a predetermined range. Note that if the received pulse timing signal is in outage, the counted number of pulses of the high-frequency signal may increase constantly since there are no corresponding edges of the received pulse timing signal, so that the difference between the counted number and the reference number falls outside the predetermined range. The reference number of pulses of the high-frequency signal may be counted between two predetermined edges of the received pulse timing signal in normal status during a calibration process. Since the pulse timing signal received from the GNSS receiver is generally in normal status most of the time, the received pulse timing signal may be considered to be in normal status if the corresponding counted number of pulses remains unchanged or the difference between the counted number and the reference number falls within the predetermined range for a long enough time. Optionally, the calibration process may be performed periodically in order to cope with the possible aging of the high-stability oscillator. The detector 3044 may be implemented by using various hardware circuits such as field programmable gate array (FPGA), application specific integrated circuit (ASIC), or the like.

The normal signal generator 3045 may be configured to generate a normal pulse timing signal based on the high-frequency signal. For example, the normal signal generator 3045 may be configured to generate the normal pulse timing signal based on the high-frequency signal and the reference number of pulses of the high-frequency signal. The normal signal generator 3045 may be implemented by using various hardware circuits such as field programmable gate array (FPGA), application specific integrated circuit (ASIC), or the like.

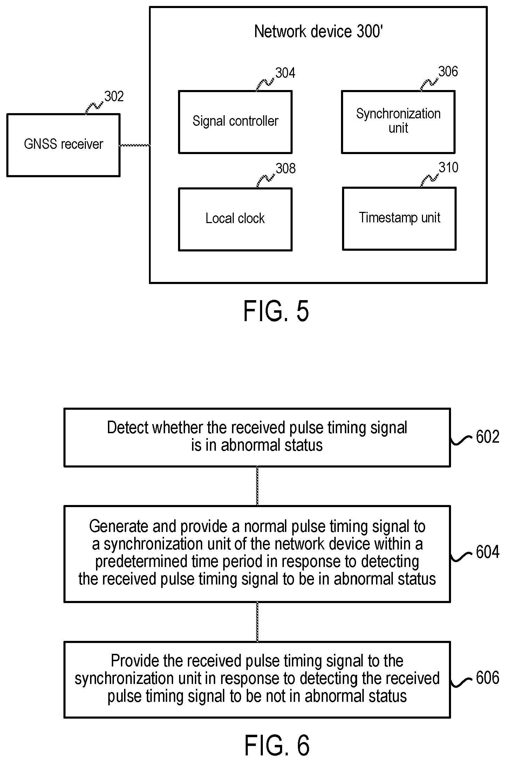

FIG. 5 is a diagram illustrating a network device according to an embodiment of the disclosure. The network device is capable of acting as a PTP master. As shown, the network device 300' comprises or is connectable with a GNSS receiver 302 for receiving a pulse timing signal (e.g. a 1PPS signal). The network device 300' comprises a signal controller 304, a synchronization unit 306, a local clock 308 and a timestamp unit 310. Thus, the difference between the network device 300' and the network device 300 lies in that the component (e.g. the local clock 308 or the timestamp unit 310) related to timestamping is further shown in the network device 300' of FIG. 5. As an example, the timestamp unit 310 may be configured to generate timestamps for PTP messages based on clock signals from the synchronization unit 306. As another example, the local clock 308 may be configured to maintain a local time based on clock signals from the synchronization unit. The timestamp unit 310 may be configured to generate timestamps for PTP messages based on the local time of the local clock.

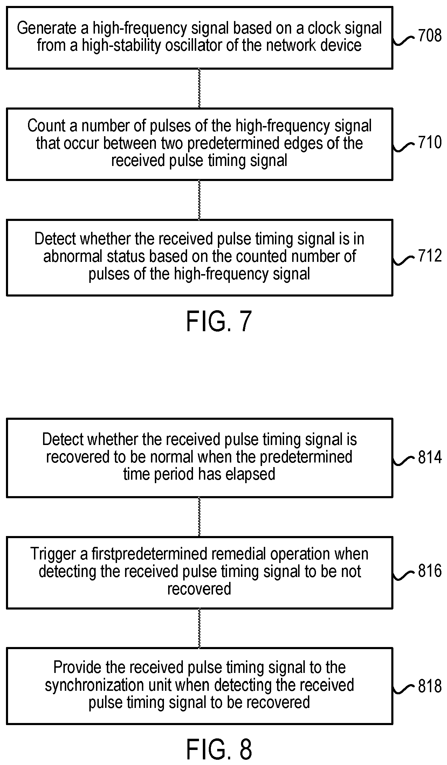

FIG. 6 is a flowchart illustrating a method performed by a network device according to an embodiment of the disclosure. The network device comprises or is connectable with a GNSS receiver for receiving a pulse timing signal (e.g. a 1PPS signal). Thus, the network device is capable of acting as a PTP master. At block 602, the network device detects whether the received pulse timing signal is in abnormal status. As a first case, the abnormal status may be a status where the received pulse timing signal is in outage. As a second case, the abnormal status may be a status where the received pulse timing signal is degraded. For either of the two cases, block 602 may be implemented as blocks 708-712 of FIG. 7.

At block 708, the network device generates a high-frequency signal based on a clock signal from a high-stability oscillator of the network device. For example, the high-stability oscillator may be a TCXO, or an OCXO, or any other oscillator with similar performance. The high-frequency signal may be generated by using a PLL/DPLL, or any other circuit with similar functionality. At block 710, the network device counts a number of pulses of the high-frequency signal that occur between two predetermined edges of the received pulse timing signal. For example, the number of pulses of the high-frequency signal may be counted by the counter 3043 described above.

At block 712, the network device detects whether the received pulse timing signal is in abnormal status based on the counted number of pulses of the high-frequency signal. For example, the received pulse timing signal may be detected to be in abnormal status when a difference between the counted number of pulses of the high-frequency signal and a reference number of pulses of the high-frequency signal is not within a predetermined range. The reference number of pulses of the high-frequency signal may be counted between two predetermined edges of the received pulse timing signal in normal status during a calibration process. Optionally, the calibration process may be performed periodically in order to cope with the possible aging of the high-stability oscillator.

At block 604, the network device generates and provides a normal pulse timing signal to a synchronization unit of the network device within a predetermined time period in response to detecting the received pulse timing signal to be in abnormal status. For instance, the normal pulse timing signal may be generated based on the high-frequency signal. As an exemplary example, the normal pulse timing signal may be generated based on the high-frequency signal and the reference number of pulses of the high-frequency signal. The synchronization unit may be a PLL/DPLL, or any other circuit with similar functionality. For the above first case where the received pulse timing signal is in outage, a timer whose expiration time is the predetermined time period may be started in response to detecting the received pulse timing signal to be in abnormal status. For the above second case where the received pulse timing signal is degraded, the predetermined time period may be a time period during which a predetermined number of consecutive pulse timing signals are detected in terms of occurrence or absence of degradation.

At block 606, the network device provides the received pulse timing signal to the synchronization unit in response to detecting the received pulse timing signal to be not in abnormal status. With the method of FIG. 6, the unstable problem of the GNSS receiver can be solved to improve the stability of the PTP master.

FIG. 8 is a flowchart illustrating a method performed by a network device according to an embodiment of the disclosure. The method may be applicable to the above first case where the received pulse timing signal is in outage. At block 814, the network device detects whether the received pulse timing signal is recovered to be normal when the predetermined time period has elapsed. For example, block 814 may be implemented in a way similar to block 602. At block 816, the network device triggers a first predetermined remedial operation when detecting the received pulse timing signal to be not recovered. For example, the first predetermined remedial operation may comprise, but not limited to, a PTP holdover, or a switching to a backup clock source. At block 818, the network device provides the received pulse timing signal to the synchronization unit when detecting the received pulse timing signal to be recovered.

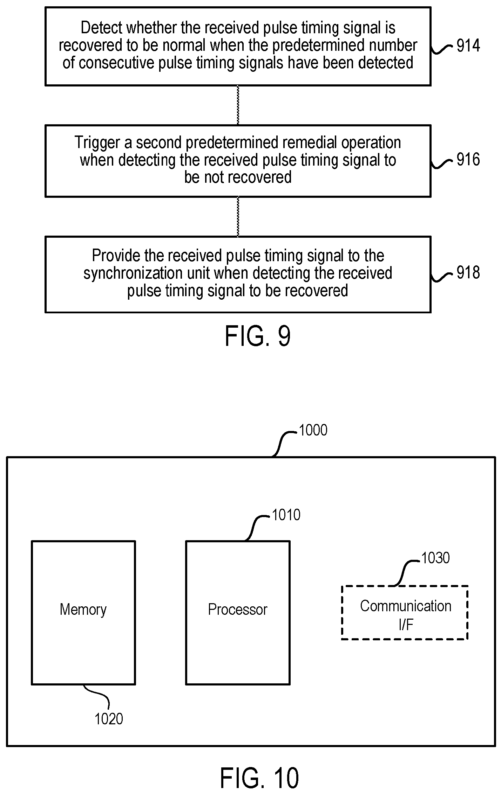

FIG. 9 is a flowchart illustrating a method performed by a network device according to an embodiment of the disclosure. The method may be applicable to the above second case where the received pulse timing signal is degraded. At block 914, the network device detects whether the received pulse timing signal is recovered to be normal when the predetermined number of consecutive pulse timing signals have been detected. For example, block 914 may be implemented in a way similar to block 602. At block 916, the network device triggers a second predetermined remedial operation when detecting the received pulse timing signal to be not recovered. For example, the second predetermined remedial operation may comprise, but not limited to, a PTP holdover, or a switching to a backup clock source, or a restart of the GNSS receiver. At block 918, the network device provides the received pulse timing signal to the synchronization unit when detecting the received pulse timing signal to be recovered.

FIG. 10 is a block diagram showing an apparatus suitable for use in practicing some embodiments of the disclosure. For example, at least part of the network device described above may be implemented through the apparatus 1000. As shown, the apparatus 1000 may include a processor 1010, a memory 1020 that stores a program, and optionally a communication interface 1030 for communicating data with other external devices through wired and/or wireless communication.

The program includes program instructions that, when executed by the processor 1010, enable the apparatus 1000 to operate in accordance with the embodiments of the present disclosure, as discussed above. That is, the embodiments of the present disclosure may be implemented at least in part by computer software executable by the processor 1010, or by hardware, or by a combination of software and hardware.

The memory 1020 may be of any type suitable to the local technical environment and may be implemented using any suitable data storage technology, such as semiconductor based memory devices, flash memories, magnetic memory devices and systems, optical memory devices and systems, fixed memories and removable memories. The processor 1010 may be of any type suitable to the local technical environment, and may include one or more of general purpose computers, special purpose computers, microprocessors, digital signal processors (DSPs) and processors based on multi-core processor architectures, as non-limiting examples.

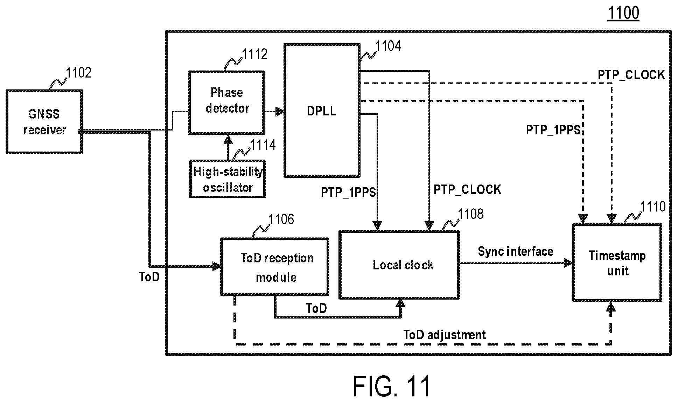

FIG. 11 is a block diagram showing a network device according to an embodiment of the disclosure. As shown, the network device 1100 may comprise or be connectable with a GNSS receiver 1102 for receiving a 1PPS signal. Thus, the network device 1100 is capable of acting as a PTP master. The network device 1100 comprises a phase detector 1112, a high-stability oscillator 1114, a DPLL 1104, a ToD reception module 1106, a local clock 1108 and a timestamp unit 1110. Compared with the existing network device 100 of FIG. 1, it can be seen that a hardware (HW) phase detector 1112 is added between the GNSS receiver 1102 and the DPLL 1104 in this embodiment. Thus, the signal controller 304 of FIG. 3 is implemented as including the phase detector 1112, the high-stability oscillator 1114, and some part of the software (SW) described later in this embodiment. The newly added phase detector 1112 may be a FPGA or an ASIC chip. The clock source of the phase detector 1112 may be a high-stability oscillator such as a TCXO, an OCXO, or any other oscillator with stable frequency accuracy. The phase detector 1112 may be configured to detect a GNSS receiver failure event (e.g. short outage, or signal degradation) and simulate a correct (or normal) 1PPS signal to the DPLL 1104. With the network device 1100, the impact when the GNSS receiver is unstable (which may be caused by sky view, weather, interference, etc.) can be mitigated. This, in turn, is very helpful for the stability of the sync network.

From the oscillator point of view, the frequency stability of a crystal oscillator is greatly affected by temperature, and the frequency stability of any crystal oscillator decreases with aging time. Thus, e.g. a TCXO or an OCXO available in market may be used for achieving high frequency stability. For example, some OCXO frequency stability can reach +-3ppb daily over -40°C ~ 85°C.

From the software (SW) point of view, there may be three sub-modules inside the phase detector 1112. The first sub-module is a hold-off timer so that if 1PPS short outage happens, the network device or the node waits for specific hold-off time before going to holdover or switching to a backup source. The second sub-module is a degradation counter so that when a predetermined number of consecutive 1PPS signals are detected by the phase detector 1112 and thus the degradation counter reaches the predetermined number (which may be configurable), the phase detector 1112 can stop to simulate a correct 1PPS signal to the DPLL 1104. The third sub-module is a GNSS receiver restart module. In case that the GNSS receiver can support remote restart, this function may be supported by the third sub-module to restart the GNSS receiver. Optionally, from the SW point of view, there may be a command or instruction for controlling the enabling or disabling of the phase detector (or the GNSS receiver performance detector).

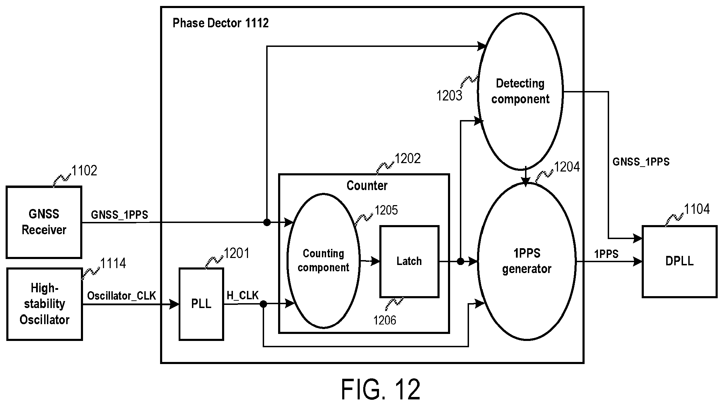

FIG. 12 illustrates an exemplary example for the phase detector of FIG. 11. As shown, the phase detector 1112 may comprise a PLL 1201, a counter 1202, a detecting component 1203 and a 1PPS generator 1204. The PLL 1201 (e.g. an internal PLL) may be used to generate a high frequency clock signal (H_CLK) which is locked with the high-stability oscillator 1114. The counter 1202 may comprise a counting component 1205 and a latch 1206. The counting component 1205 may be driven by the H_CLK signal to count the pulses of the H_CLK signal that occur in the interval between two GNSS receiver 1PPS rising edges, so as to get the counter value per second. The counter value may be latched by the latch 1206 and provided to the detecting component 1203. Note that in the calibration process, the counter value obtained when the GNSS receiver 1102 is working normally may be used as the reference counter value for detecting abnormality in the 1PPS signal. In order to improve the accuracy, the frequency of the H_CLK signal may be as higher as possible and multiple cycles of 1PPS can be counted. The above actions may be executed periodically to eliminate the deviation produced by the counter due to the frequency granularity of H_CLK and to reduce the impact of the oscillator aging.

The phase detecting component 1203 may detect whether the phase error between the current counter value and the reference counter value is not within a predetermined range. When detecting that the GNSS receiver 1102 is unstable (e.g. when the phase error is not within the predetermined range), the 1PPS generator 1204 may be triggered to generate and provide an accurate 1PPS to the DPLL 1104. On the other hand, when detecting that the GNSS receiver 1102 is stable, the received 1PPS signal may be provided to the DPLL 1104.

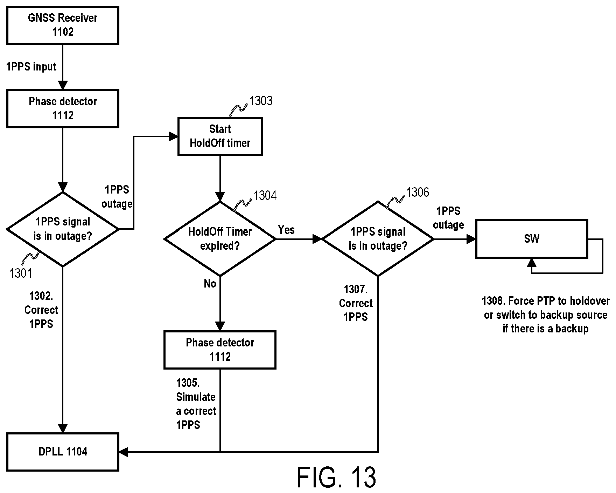

FIG. 13 is a flowchart illustrating an exemplary process performed by the network device of FIG. 11. This process corresponds to the above first case where the GNSS receiver has short outage. As shown, the 1PPS signal is provided to the phase detector 1112 from the GNSS receiver 1102. The phase detector 1112 checks each 1PPS signal at block 1301. If the 1PPS signal is correct or in good performance, without loss of signal (LOS) and signal degradation, the 1PPS signal is transmitted to the DPLL 1104 as the input source of the DPLL 1104 at block 1302. On the other hand, if the phase detector 1112 detects that there is 1PPS LOS, both the phase detector and the SW start a holdoff timer at block 1303. The holdoff timer could be configurable and start with a default value.

Whether the holdoff timer has expired may be determined at block 1304. If the result of the determination is negative (i.e. during the holdoff timer period), the phase detector 1112 simulates and provides a 1PPS signal to the DPLL 1104 based on the high-stability oscillator at block 1305. On the other hand, if the holdoff timer has expired, the phase detector 1112 detects the quality of the 1PPS signal at block 1306.

If the 1PPS signal is recovered and correct, the phase detector 1112 transmits the 1PPS signal to the DPLL 1104 as the input source of the DPLL 1104 at block 1307. On the other hand, if the 1PPS signal is still LOS, the phase detector 1112 informs the SW of this event. The SW forces to holdover or switch to a backup clock source (if there is a backup) at block 1308.

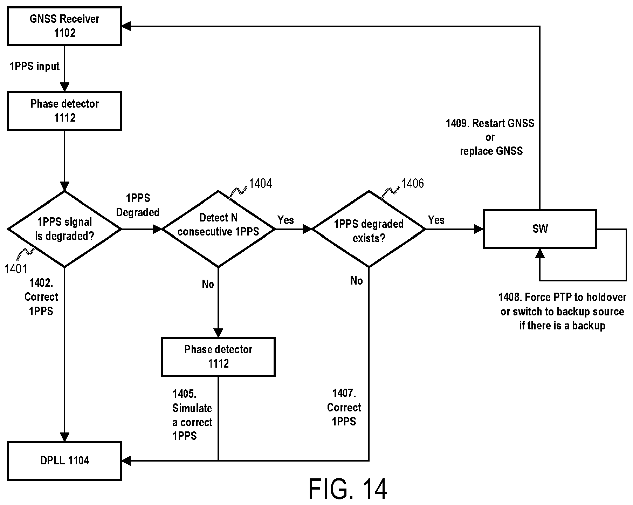

FIG. 14 is a flowchart illustrating an exemplary process performed by the network device of FIG. 11. This process corresponds to the above second case where the 1PPS signal from the GNSS receiver is degraded. As shown, the 1PPS signal is provided to the phase detector 1112 from the GNSS receiver 1102. The phase detector 1112 checks each 1PPS signal at block 1401. If the 1PPS signal is correct or in good performance, without LOS and signal degradation, the signal is transmitted to the DPLL 1104 as the input source of the DPLL 1104 at block 1402. On the other hand, if the phase detector 1112 detects that the 1PPS signal has been degraded, N consecutive 1PPS signals are detected at block 1404, where N is a predetermined number. If the number of the degraded 1PPS signals is less than N, the phase detector 1112 simulates and provides a 1PPS signal to the DPLL 1104 based on the high-stability oscillator at block 1405.

If the number of the degraded signals is equal to N, whether the 1PPS signal still has degradation is checked at block 1406. If no degraded signal is detected any more, the phase detector 1112 transmits the 1PPS signal to the DPLL 1104 as the input source of the DPLL 1104 at block 1407. On the other hand, if the degraded signal still exists, the phase detector 1112 informs the SW of this event. The SW may force to holdover or switch to the backup clock source (if there is a backup) at block 1408. Altematively or additionally, the SW may reset the GNSS receiver (if it supports remote control) or report an alarm for operation to manually reset the GNSS receiver or replace it with a new GNSS receiver at block 1409.

In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the disclosure is not limited thereto. While various aspects of the exemplary embodiments of this disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As such, it should be appreciated that at least some aspects of the exemplary embodiments of the disclosure may be practiced in various components such as integrated circuit chips and modules. It should thus be appreciated that the exemplary embodiments of this disclosure may be realized in an apparatus that is embodied as an integrated circuit, where the integrated circuit may comprise circuitry (as well as possibly firmware) for embodying at least one or more of a data processor, a digital signal processor, baseband circuitry and radio frequency circuitry that are configurable so as to operate in accordance with the exemplary embodiments of this disclosure.

It should be appreciated that at least some aspects of the exemplary embodiments of the disclosure may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc. As will be appreciated by one skilled in the art, the function of the program modules may be combined or distributed as desired in various embodiments. In addition, the function may be embodied in whole or in part in firmware or hardware equivalents such as integrated circuits, field programmable gate arrays (FPGA), and the like.

References in the present disclosure to "one embodiment", "an embodiment" and so on, indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

It should be understood that, although the terms "first", "second" and so on may be used herein to describe various elements, these elements should not be limited by these terms. These terms are only used to distinguish one element from another. For example, a first element could be termed a second element, and similarly, a second element could be termed a first element, without departing from the scope of the disclosure. As used herein, the term "and/or" includes any and all combinations of one or more of the associated listed terms.

The terminology used herein is for the purpose of describing particular embodiments only and is not intended to limit the present disclosure. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components, but do not preclude the presence or addition of one or more other features, elements, components and/ or combinations thereof. The terms "connect", "connects", "connecting" and/or "connected" used herein cover the direct and/or indirect connection between two elements. It should be noted that two blocks shown in succession in the above figures may, in fact, be executed substantially concurrently, or the blocks may sometimes be executed in the reverse order, depending upon the functionality involved.

## Claims

1. A method performed by a network device (300, 300') acting as a precision time protocol, PTP, master, the network device (300, 300') comprising or connectable with a global navigation satellite system, GNSS, receiver (302) for receiving a pulse timing signal, the method comprising:
detecting (602) whether the received pulse timing signal is in abnormal status;
generating and providing (604) a generated pulse timing signal to a synchronization unit (306) of the network device (300, 300') within a predetermined time period in response to detecting the received pulse timing signal to be in abnormal status; and
providing (606) the received pulse timing signal to the synchronization unit (306) in response to detecting the received pulse timing signal to be not in abnormal status,
wherein detecting (602) whether the received pulse timing signal is in abnormal status comprises:
generating (708) a high-frequency signal based on a clock signal from a high-stability oscillator (3041) of the network device (300, 300');
counting (710) a number of pulses of the high-frequency signal that occur between two predetermined edges of the received pulse timing signal; and
detecting (712) whether the received pulse timing signal is in abnormal status based on the counted number of pulses of the high-frequency signal; and
wherein the generated pulse timing signal is generated based on the high-frequency signal; and
wherein the high-stability oscillator (3041) is a temperature compensation crystal oscillator, TCXO, or an oven controlled crystal oscillator, OCXO.

2. The method according to claim 1, wherein the abnormal status is a status where the received pulse timing signal is in outage; and
wherein the method further comprises:
detecting (814) whether the received pulse timing signal is recovered to be normal when the predetermined time period has elapsed; and
triggering (816) a first predetermined remedial operation when detecting the received pulse timing signal to be not recovered.

3. The method according to claim 2, wherein the first predetermined remedial operation comprises:
a PTP holdover; or
a switching to a backup clock source.

4. The method according to claim 1, wherein the abnormal status is a status where the received pulse timing signal is degraded;
wherein the predetermined time period is a time period during which a predetermined number of consecutive pulse timing signals are detected in terms of occurrence or absence of degradation; and
wherein the method further comprises:
detecting (914) whether the received pulse timing signal is recovered to be normal when the predetermined number of consecutive pulse timing signals have been detected; and
triggering (916) a second predetermined remedial operation when detecting the received pulse timing signal to be not recovered.

5. The method according to claim 4, wherein the second predetermined remedial operation comprises:
a PTP holdover; or
a switching to a backup clock source; or
a restart of the GNSS receiver.

6. The method according to any of claims 2 to 5, further comprising:
providing (818, 918) the received pulse timing signal to the synchronization unit (306) when detecting the received pulse timing signal to be recovered.

7. The method according to claim 1, wherein the received pulse timing signal is detected to be in abnormal status when a difference between the counted number of pulses of the high-frequency signal and a reference number of pulses of the high-frequency signal is not within a predetermined range; and
wherein the generated pulse timing signal is generated based on the high-frequency signal and the reference number of pulses of the high-frequency signal.

8. The method according to claim 7, wherein the reference number of pulses of the high-frequency signal is counted between two predetermined edges of the received pulse timing signal in normal status during a calibration process; and/or
wherein the calibration process is performed periodically.

9. The method according to any of claims 1 to 8, wherein the synchronization unit (306) is a PLL or a DPLL.

10. The method according to any of claims 1 to 9, wherein the pulse timing signal is a one pulse per second, 1PPS, signal.

11. The method according to any of claims 1 to 10, wherein the network device acts as one of:
a telecom grandmaster, T-GM;
a telecom boundary clock, T-BC; and
an assisted partial-support telecom boundary clock, T-BC-A.

12. A network device (1000) acting as a precision time protocol, PTP, master, the network device (1000) comprising or connectable with a global navigation satellite system, GNSS, receiver for receiving a pulse timing signal, the network device (1000) comprising:
at least one processor (1010); and
at least one memory (1020), the at least one memory (1020) containing instructions executable by the at least one processor (1010), whereby the network device (1000) is operative to:
detect whether the received pulse timing signal is in abnormal status;
generate and provide a generated pulse timing signal to a synchronization unit (306) of the network device within a predetermined time period in response to detecting the received pulse timing signal to be in abnormal status; and
provide the received pulse timing signal to the synchronization unit (306) in response to detecting the received pulse timing signal to be not in abnormal status,
wherein detect whether the received pulse timing signal is in abnormal status comprises:
generate a high-frequency signal based on a clock signal from a high-stability oscillator (3041) of the network device (300, 300');
count a number of pulses of the high-frequency signal that occur between two predetermined edges of the received pulse timing signal; and
detect whether the received pulse timing signal is in abnormal status based on the counted number of pulses of the high-frequency signal; and
wherein the generated pulse timing signal is generated based on the high-frequency signal; and
wherein the high-stability oscillator (3041) is a temperature compensation crystal oscillator, TCXO, or an oven controlled crystal oscillator, OCXO.

13. The network device (1000) according to claim 12, wherein the network device (1000) is operative to perform the method according to any of claims 2 to 11.

14. A computer readable storage medium storing thereon instructions which when executed by at least one processor, cause the at least one processor to perform the method according to any of claims 1 to 11.

## Patentansprüche

1. Verfahren, das von einer Netzwerkvorrichtung (300, 300') durchgeführt wird, die als Präzisionszeitprotokoll-Master, PTP-Master, fungiert, wobei die Netzwerkvorrichtung (300, 300') einen Empfänger (302) eines globalen Satellitennavigationssystems, GNSS, zum Empfangen eines Impulstaktsignals umfasst oder damit verbunden werden kann, wobei das Verfahren Folgendes umfasst:
Erkennen (602), ob das empfangene Impulstaktsignal in einem anormalen Zustand ist;
Erzeugen und Bereitstellen (604) eines erzeugten Impulstaktsignals an eine Synchronisationseinheit (306) der Netzwerkvorrichtung (300, 300') innerhalb eines vorbestimmten Zeitraums in Reaktion auf ein Erkennen, dass das empfangene Impulstaktsignal in einem anormalen Zustand ist; und
Bereitstellen (606) des empfangenen Impulstaktsignals an die Synchronisationseinheit (306) in Reaktion auf ein Erkennen, dass das empfangene Impulstaktsignal nicht in einem anormalen Zustand ist,
wobei das Erkennen (602), ob das empfangene Impulstaktsignal in einem anormalen Zustand ist, Folgendes umfasst:
Erzeugen (708) eines Hochfrequenzsignals basierend auf einem Taktsignal von einem hochstabilen Oszillator (3041) der Netzwerkvorrichtung (300, 300');
Zählen (710) einer Anzahl von Impulsen des Hochfrequenzsignals, die zwischen zwei vorbestimmten Flanken des empfangenen Impulstaktsignals auftreten; und
Erkennen (712), ob das empfangene Impulstaktsignal in einem anormalen Zustand ist, basierend auf der gezählten Anzahl von Impulsen des Hochfrequenzsignals; und
wobei das erzeugte Impulstaktsignal basierend auf dem Hochfrequenzsignal erzeugt wird; und
wobei der hochstabile Oszillator (3041) ein temperaturkompensierter Oszillator, TCXO, oder ein ofengesteuerter Quarzoszillator, OCXO, ist.

2. Verfahren nach Anspruch 1, wobei der anormale Zustand ein Zustand ist, in dem das empfangene Impulstaktsignal ausfällt; und
wobei das Verfahren ferner Folgendes umfasst:
Erkennen (814), ob das empfangene Impulstaktsignal so wiederhergestellt wird, dass es normal ist, wenn der vorbestimmte Zeitraum verstrichen ist; und
Auslösen (816) einer ersten vorbestimmten Abhilfemaßnahme, wenn erkannt wird, dass das empfangene Impulstaktsignal nicht wiederhergestellt wird.

3. Verfahren nach Anspruch 2, wobei die erste vorbestimmte Abhilfemaßnahme Folgendes umfasst:
ein PTP-Holdover; oder
Umschalten auf eine Backup-Taktquelle.

4. Verfahren nach Anspruch 1, wobei der anormale Zustand ein Zustand ist, in dem das empfangene Impulstaktsignal verschlechtert ist; und
wobei der vorbestimmte Zeitraum ein Zeitraum ist, während dessen eine vorbestimmte Anzahl aufeinanderfolgender Impulstaktsignale hinsichtlich des Auftretens oder Fehlens einer Verschlechterung erkannt wird; und
wobei das Verfahren ferner Folgendes umfasst:
Erkennen (914), ob das empfangene Impulstaktsignal so wiederhergestellt wird, dass es normal ist, wenn die vorbestimmte Anzahl von aufeinanderfolgenden Impulstaktsignalen erkannt wurde; und
Auslösen (916) einer zweiten vorbestimmten Abhilfemaßnahme, wenn erkannt wird, dass das empfangene Impulstaktsignal nicht wiederhergestellt wird.

5. Verfahren nach Anspruch 4, wobei die zweite vorbestimmte Abhilfemaßnahme Folgendes umfasst:
ein PTP-Holdover; oder
Umschalten auf eine Backup-Taktquelle; oder
einen Neustart des GNSS-Empfängers.

6. Verfahren nach einem der Ansprüche 2 bis 5, ferner umfassend:
Bereitstellen (818, 918) des empfangenen Impulstaktsignals an die Synchronisationseinheit (306) in Reaktion auf ein Erkennen, dass das empfangene Impulstaktsignal wiederhergestellt wird.

7. Verfahren nach Anspruch 1, wobei erkannt wird, dass das empfangene Impulstaktsignal in einem anormalen Zustand ist, wenn eine Differenz zwischen der gezählten Anzahl von Impulsen des Hochfrequenzsignals und einer Referenzanzahl von Impulsen des Hochfrequenzsignals nicht innerhalb eines vorbestimmten Bereichs liegt; und
wobei das erzeugte Impulstaktsignal basierend auf dem Hochfrequenzsignal und der Referenzanzahl von Impulsen des Hochfrequenzsignals erzeugt wird.

8. Verfahren nach Anspruch 7, wobei die Referenzanzahl von Impulsen des Hochfrequenzsignals zwischen zwei vorbestimmten Flanken des empfangenen Impulstaktsignal in einem normalen Zustand während eines Kalibrierprozesses gezählt wird; und/oder
wobei der Kalibrierprozess periodisch durchgeführt wird.

9. Verfahren nach einem der Ansprüche 1 bis 8, wobei die Synchronisationseinheit (306) ein PLL oder ein DPLL ist.

10. Verfahren nach einem der Ansprüche 1 bis 9, wobei das Impulstaktsignal ein Signal mit einem Impuls pro Sekunde, 1PPS, ist.

11. Verfahren nach einem der Ansprüche 1 bis 10, wobei die Netzwerkvorrichtung als eines von Folgenden fungiert:
eine Telecom-Grandmaster, T-GM;
eine Telecom-Boundary-Clock, T-BC; und
eine Telecom-Boundary-Clock mit unterstützter Teilunterstützung, T-BC-A.

12. Netzwerkvorrichtung (1000), die als Präzisionszeitprotokoll-Master, PTP-Master, fungiert, wobei die Netzwerkvorrichtung (1000) einen Empfänger eines globalen Satellitennavigationssystems, GNSS, zum Empfangen eines Impulstaktsignals umfasst oder damit verbunden werden kann, wobei die Netzwerkvorrichtung (1000) Folgendes umfasst:
mindestens einen Prozessor (1010); und
mindestens einen Speicher (1020), wobei der mindestens eine Speicher (1020) Anweisungen enthält, die von dem mindestens einen Prozessor (1010) ausgeführt werden können, wodurch die Netzwerkvorrichtung (1000) zu Folgendem ausgelegt ist:
Erkennen, ob das empfangene Impulstaktsignal in einem anormalen Zustand ist;
Erzeugen und Bereitstellen eines erzeugten Impulstaktsignals an eine Synchronisationseinheit (306) der Netzwerkvorrichtung innerhalb eines vorbestimmten Zeitraums in Reaktion auf ein Erkennen, dass das empfangene Impulstaktsignal in einem anormalen Zustand ist; und
Bereitstellen des empfangenen Impulstaktsignals an die Synchronisationseinheit (306) in Reaktion auf ein Erkennen, dass das empfangene Impulstaktsignal nicht in einem anormalen Zustand ist,
wobei das Erkennen, ob das empfangene Impulstaktsignal in einem anormalen Zustand ist, Folgendes umfasst:
Erzeugen eines Hochfrequenzsignals basierend auf einem Taktsignal von einem hochstabilen Oszillator (3041) der Netzwerkvorrichtung (300, 300');
Zählen einer Anzahl von Impulsen des Hochfrequenzsignals, die zwischen zwei vorbestimmten Flanken des empfangenen Impulstaktsignals auftreten; und
Erkennen, ob das empfangene Impulstaktsignal in einem anormalen Zustand ist, basierend auf der gezählten Anzahl von Impulsen des Hochfrequenzsignals; und
wobei das erzeugte Impulstaktsignal basierend auf dem Hochfrequenzsignal erzeugt wird; und
wobei der hochstabile Oszillator (3041) ein temperaturkompensierter Oszillator, TCXO, oder ein ofengesteuerter Quarzoszillator, OCXO, ist.

13. Netzwerkvorrichtung (1000) nach Anspruch 12, wobei die Netzwerkvorrichtung (1000) zum Durchführen des Verfahrens nach einem der Ansprüche 2 bis 11 ausgelegt ist.

14. Computerlesbares Speichermedium, das Anweisungen darauf speichert, die bei Ausführung durch mindestens einen Prozessor den mindestens einen Prozessor zum Durchführen des Verfahrens nach einem der Ansprüche 1 bis 11 veranlassen.

## Revendications

1. Procédé réalisé par un dispositif de réseau (300, 300') agissant en tant que maître de protocole de temps de précision, PTP, le dispositif de réseau (300, 300') comprenant, ou pouvant être connecté à, un récepteur de système mondial de navigation par satellite, GNSS, (302) pour recevoir un signal de temporisation d'impulsion, le procédé comprenant :
la détection (602) si le signal de temporisation d'impulsion reçu est dans un état anormal ;
la génération et la fourniture (604) d'un signal de temporisation d'impulsion généré à une unité de synchronisation (306) du dispositif de réseau (300, 300') au cours d'une période de temps prédéterminée en réponse à la détection que le signal de temporisation d'impulsion reçu est dans un état anormal ; et
la fourniture (606) du signal de temporisation d'impulsion reçu à l'unité de synchronisation (306) en réponse à la détection que le signal de temporisation d'impulsion reçu n'est pas dans un état anormal,
dans lequel la détection (602) si le signal de temporisation d'impulsion reçu est dans un état anormal comprend :
la génération (708) d'un signal à haute fréquence sur la base d'un signal d'horloge à partir d'un oscillateur à stabilité élevée (3041) du dispositif de réseau (300, 300') ;
le comptage (710) d'un nombre d'impulsions du signal à haute fréquence survenant entre deux fronts prédéterminés du signal de temporisation d'impulsion reçu ; et
la détection (712) si le signal de temporisation d'impulsion reçu est dans un état anormal sur la base du nombre compté d'impulsions du signal à haute fréquence ; et
dans lequel le signal de temporisation d'impulsion généré est généré sur la base du signal à haute fréquence ; et
dans lequel l'oscillateur à stabilité élevée (3041) est un oscillateur à quartz de compensation de température, TCXO, ou un oscillateur à quartz thermostaté, OCXO.

2. Procédé selon la revendication 1, dans lequel l'état anormal est un état dans lequel le signal de temporisation d'impulsion reçu est interrompu ; et
dans lequel le procédé comprend en outre :
la détection (814) si le signal de temporisation d'impulsion reçu est redevenu normal lorsque la période de temps prédéterminé s'est écoulée ; et
le déclenchement (816) d'une première opération corrective prédéterminée lors de la détection que le signal de temporisation d'impulsion reçu n'est pas redevenu normal.

3. Procédé selon la revendication 2, dans lequel la première opération corrective prédéterminée comprend :
un maintien de PTP ; ou
une commutation à une source d'horloge de secours.

4. Procédé selon la revendication 1, dans lequel l'état anormal est un état dans lequel le signal de temporisation d'impulsion reçu est dégradé ;
dans lequel la période de temps prédéterminée est une période de temps au cours de laquelle un nombre prédéterminé de signaux de temporisation d'impulsion consécutifs sont détectés en termes de présence ou d'absence de dégradation ; et
dans lequel le procédé comprend en outre :
la détection (914) si le signal de temporisation d'impulsion reçu est redevenu normal lorsque le nombre prédéterminé de signaux de temporisation d'impulsion consécutifs ont été détectés ; et
le déclenchement (916) d'une deuxième opération corrective prédéterminée lorsqu'il est détecté que le signal de temporisation d'impulsion reçu n'est pas redevenu normal.

5. Procédé selon la revendication 4, dans lequel la deuxième opération corrective prédéterminée comprend :
un maintien de PTP ; ou
une commutation à une source d'horloge de secours ; ou
un redémarrage du récepteur GNSS.

6. Procédé selon l'une quelconque des revendications 2 à 5, comprenant en outre :
la fourniture (818, 918) du signal de temporisation d'impulsion reçu à l'unité de synchronisation (306) lorsqu'il est détecté que le signal de temporisation d'impulsion reçu est redevenu normal.

7. Procédé selon la revendication 1, dans lequel le signal de temporisation d'impulsion reçu est détecté comme étant dans un état anormal lorsqu'une différence entre le nombre compté d'impulsions du signal à haute fréquence et un nombre de référence d'impulsions du signal à haute fréquence n'est pas dans une plage prédéterminée ; et
dans lequel le signal de temporisation d'impulsion généré est généré sur la base du signal à haute fréquence et du nombre de référence d'impulsions du signal à haute fréquence.

8. Procédé selon la revendication 7, dans lequel le nombre de référence d'impulsions du signal à haute fréquence est compté entre deux fronts prédéterminés du signal de temporisation d'impulsion reçu dans un état normal au cours d'un processus d'étalonnage ; et/ou
dans lequel le processus d'étalonnage est réalisé périodiquement.

9. Procédé selon l'une quelconque des revendications 1 à 8, dans lequel l'unité de synchronisation (306) est une PLL ou une DPLL.

10. Procédé selon l'une quelconque des revendications 1 à 9, dans lequel le signal de temporisation d'impulsion est un signal à une impulsion par seconde, 1 PPS.

11. Procédé selon l'une quelconque des revendications 1 à 10, dans lequel le dispositif de réseau agit en tant que l'un parmi :
un grand-maître de télécom, T-GM ;
une horloge de limite de télécom, T-BC ; et
une horloge de limite de télécom à prise en charge partielle assistée, T-BC-A.

12. Dispositif de réseau (1000) agissant en tant que maître de protocole de temps de précision, PTP, le dispositif de réseau (1000) comprenant, ou pouvant être connecté à, un récepteur de système mondial de navigation par satellite, GNSS, pour recevoir un signal de temporisation d'impulsion, le dispositif de réseau (1000) comprenant :
au moins un processeur (1010) ; et
au moins une mémoire (1020), l'au moins une mémoire (1020) contenant des instructions exécutables par l'au moins un processeur (1010), selon lesquelles le dispositif de réseau (1000) est fonctionnel pour :
détecter si le signal de temporisation d'impulsion reçu est dans un état anormal ;
générer et fournir un signal de temporisation d'impulsion généré à une unité de synchronisation (306) du dispositif de réseau au cours d'une période de temps prédéterminée en réponse à la détection que le signal de temporisation d'impulsion reçu est dans un état anormal ; et
fournir le signal de temporisation d'impulsion reçu à l'unité de synchronisation (306) en réponse à la détection que le signal de temporisation d'impulsion reçu n'est pas dans un état anormal,
dans lequel détecter si le signal de temporisation d'impulsion reçu est dans un état anormal comprend :
générer un signal à haute fréquence sur la base d'un signal d'horloge à partir d'un oscillateur à stabilité élevée (3041) du dispositif de réseau (300, 300') ;
compter un nombre d'impulsions du signal à haute fréquence survenant entre deux fronts prédéterminés du signal de temporisation d'impulsion reçu ; et
détecter si le signal de temporisation d'impulsion reçu est dans un état anormal sur la base du nombre compté d'impulsions du signal à haute fréquence ; et
dans lequel le signal de temporisation d'impulsion généré est généré sur la base du signal à haute fréquence ; et
dans lequel l'oscillateur à stabilité élevée (3041) est un oscillateur à quartz de compensation de température, TCXO, ou un oscillateur à quartz thermostaté, OCXO.

13. Dispositif de réseau (1000) selon la revendication 12, dans lequel le dispositif de réseau (1000) est fonctionnel pour réaliser le procédé selon l'une quelconque des revendications 2 à 11.

14. Support de stockage lisible par ordinateur stockant, sur celui-ci, des instructions qui, lorsqu'elles sont exécutées par au moins un processeur, amènent l'au moins un processeur à réaliser le procédé selon l'une quelconque des revendications 1 à 11.
